# EUROPEAN PATENT APPLICATION

(11) **EP 4 648 527 A1**
(43) Date of publication of application: **12.11.2025**
(21) Application number: 23914099.9
(22) Date of filing: 06.01.2023
(51) Int. Cl.: H04W 74/00

(54) **METHOD AND APPARATUS FOR DETERMINING NETWORK SLICE AS GROUP (NSAG), AND METHOD AND APPARATUS FOR CONFIGURING NSAG**

(71) Applicant: Beijing Xiaomi Mobile Software Co., Ltd., Beijing 100085 (CN)
(72) Inventor: LIU, Xiaofei, Beijing 100085 (CN)
(74) Representative: Stöckeler, Ferdinand
(86) International application number: PCT/CN2023/071110
(87) International publication number: WO 2024/145942

(57) **Abstract**

The present disclosure provides a method and apparatus for determining a network slice AS group (NSAG), a method and apparatus for configuring a NSAG, and a storage medium. The method for determining the NSAG comprises: determining one or more first NSAGs as target NSAGs suitable for random access. The present disclosure specifies a behavior of a terminal selecting a target NSAG to be applied in random access, thereby improving the reliability of random access resource selection.

## Description

### TECHNICAL FIELD

The present disclosure relates to the field of wireless communication, and in particular to a method and apparatus for determining and configuring a network slice AS group (NSAG).

### BACKGROUND

In a slice-based random access process, a terminal generally selects a NSAG with a highest priority among candidate NSAGs as a NSAG to be applied in the random access process. However, because a network device may configure NSAGs with an equal priority, there may be a plurality of candidate NSAGs, resulting in the terminal not being able to determine the NSAG to be applied in the random access process, and thus not being able to select a random access resource.

### SUMMARY

To overcome problems in the art, embodiments of the present disclosure provide a method and apparatus for determining and configuring a NSAG.

According to a first aspect of embodiments of the present disclosure, a method for determining a NSAG is provided. The method is performed by a terminal and includes:
determining one or more of first NSAGs as a target NSAG to be applied in a random access.

In an embodiment, determining the one or more of the first NSAGs as the target NSAG to be applied in the random access includes:
determining all of the first NSAGs as the target NSAG; or
determining the one or more of the first NSAGs as the target NSAG.

In an embodiment, determining the one or more of the first NSAGs as the target NSAG to be applied in the random access includes at least one of:
determining the one or more of the first NSAGs as the target NSAG based on a terminal policy;
determining the one or more of the first NSAGs as the target NSAG based on indication information sent by a network device; or
determining the one or more of the first NSAGs as the target NSAG based on a protocol agreement.

In an embodiment, the indication information indicates at least one of:
NSAG information; or
NSAG random access configuration information.

In an embodiment, the NSAG information includes a NSAG priority, the NSAG priority is used to configure a first priority for multiple first NSAGs and the first priority is used to determine the target NSAG.

In an embodiment, the NSAG random access configuration information includes at least one of:
random access resource partition configuration information; or
random access priority configuration information.

In an embodiment, the target NSAG satisfies at least one of:
fully aligning with a NSAG associated with random access configuration information;
having a first priority satisfying a preset condition;
corresponding to a largest number of random access resource partitions;
corresponding to a random access resource partition including a largest number of features; or
corresponding to a random access resource partition including a highest feature priority.

In an embodiment, the features comprise at least one of:
small data transfer (SDT);
radio access network slicing (RAN Slicing);
coverage enhancement (CE);
reduced capability (REDCAP); or
other NSAGs.

In an embodiment, the method further includes:
receiving NSAG configuration information sent by a network device, in which the NSAG configuration information is used to configure a plurality of NSAGs, the plurality of NSAGs have different second priorities, and a second priority is used to determine one of the first NSAGs;
determining a NSAG having the second priority satisfying a preset condition as the one of the first NSAGs based on the NSAG configuration information.

In an embodiment, the first NSAGs satisfy at least one of:
associated with a single network slice selection assistance information (S-NSSAI) triggering the random access;
included in a system message; or
having a third priority satisfying a preset condition, in which the third priority is used to determine the one or more of the first NSAGs.

According to a second aspect of embodiments of the present disclosure, a method for configuring a NSAG is provided. The method is performed by a network device and includes:
sending NSAG configuration information to a terminal; in which the NSAG configuration information is used to configure a plurality of NSAGs, the plurality of NSAGs have different second priorities and a second priority is used to determine one of first NSAGs.

According to a third aspect of embodiments of the present disclosure, an apparatus for determining a NSAG is provided. The apparatus is applied to a terminal and includes:
a determining module configured to determine one or more of first NSAGs as a target NSAG to be applied in a random access.

In an embodiment, the determining module includes:
a first determining submodule configured to determine all of the first NSAG as the target NSAG; or
a second determining submodule configured to determine the one or more of the first NSAGs as the target NSAG.

In an embodiment, the determining module includes at least one of:
a third determining submodule configured to determine the one or more of the first NSAGs as the target NSAG based on a terminal policy;
a fourth determining submodule configured to determine the one or more of the first NSAGs as the target NSAG based on indication information sent by a network device; or
a fifth determining submodule configured to determine the one or more of the first NSAGs as the target NSAG based on a protocol agreement.

In an embodiment, the indication information indicates at least one of:
NSAG information; or
NSAG random access configuration information.

In an embodiment, the NSAG information includes a NSAG priority, the NSAG priority is used to configure a first priority for multiple first NSAGs, and the first priority is used to determine the target NSAG.

In an embodiment, the NSAG random access configuration information includes at least one of:
random access resource partition configuration information; or
random access priority configuration information.

In an embodiment, the target NSAG satisfies at least one of:
fully aligning with a NSAG associated with random access configuration information;
having a first priority satisfying a preset condition;
corresponding to a largest number of random access resource partitions;
corresponding to a random access resource partition including a largest number of features; or
corresponding to a random access resource partition including a highest feature priority.

In an embodiment, the features include at least one of:
small data transfer (SDT);
radio access network slicing (RAN Slicing);
coverage enhancement (CE);
reduced capability (REDCAP); or
other NSAGs.

In an embodiment, the apparatus further includes:
a receiving module configured to receive NSAG configuration information sent by a network device, in which the NSAG configuration information is used to configure a plurality of NSAGs, the plurality of NSAGs have different second priorities, and a second priority is used to determine one of the first NSAGs;
the determining module is further configured to determine a NSAG having the second priority satisfying a preset condition as the one of the first NSAGs based on the NSAG configuration information.

In an embodiment, the first NSAGs satisfy at least one of:
associated with a single network slice selection assistance information (S-NSSAI) triggering the random access;
included in a system message; or
having a third priority satisfying a preset condition, in which the third priority is used to determine the one or more of the first NSAGs.

According to a fourth aspect of embodiments of the present disclosure, an apparatus for configuring a NSAG is provided. The apparatus is applied to a network device and includes:
a sending module configured to send NSAG configuration information to a terminal, in which the NSAG configuration information is used to configure a plurality of NSAGs, the plurality of NSAGs have different second priorities, and a second priority is used to determine one of the first NSAGs.

According to a fifth aspect of embodiments of the present disclosure, a computer-readable storage medium is provided. The storage medium stores a computer program, and the computer program is used to perform any method for determining the NSAG at the terminal side as described above.

According to a sixth aspect of embodiments of the present disclosure, a computer-readable storage medium is provided. The storage medium stores a computer program, and the computer program is used to perform the method for configuring the NSAG at the network device side as described above.

According to a seventh aspect of embodiments of the present disclosure, an apparatus for determining a NSAG is provided, and the apparatus includes:
a processor;
a memory for storing instructions executable by the processor;
in which the processor is configured to perform any method for determining the NSAG at the terminal side as described above.

According to an eighth aspect of embodiments of the present disclosure, an apparatus for configuring a NSAG is provided, and the apparatus includes:
a processor;
a memory for storing instructions executable by the processor;
in which the processor is configured to perform the method for configuring the NSAG at the network device side as described above.

Embodiments of the present disclosure provide technical solutions that may achieve the following beneficial effects.

In the present disclosure, the terminal may determine one or more of the first NSAGs as the target NSAG to be applied in the random access. This clarifies the behavior of the terminal in selecting the target NSAG to be applied in the random access, thereby improving a reliability of a random access resource selection.

It should be understood that the above general description and the detailed description that follows are exemplary and explanatory only and do not limit the present disclosure.

### BRIEF DESCRIPTION OF THE DRAWINGS

The accompanying drawings herein are incorporated into and form a part of the specification, illustrate embodiments in accordance with the present invention, and are used in conjunction with the specification to explain the principles of the invention.
FIG. 1 is an architecture diagram of a system for determining a NSAG illustrated according to an example embodiment.
FIG. 2 is a flowchart of a method for determining a NSAG illustrated according to an example embodiment.
FIG. 3 is a flowchart of a method for configuring a NSAG illustrated according to an example embodiment.
FIG. 4 is a flowchart of another method for determining a NSAG illustrated according to an example embodiment.
FIG. 5 is a flowchart of another method for determining a NSAG illustrated according to an example embodiment.
FIG. 6 is a block diagram of an apparatus for determining a NSAG illustrated according to an example embodiment.
FIG. 7 is a block diagram of an apparatus for configuring a NSAG illustrated according to an example embodiment.
FIG. 8 is a structure schematic diagram of an apparatus for determining a NSAG illustrated according to an example embodiment in the present disclosure.
FIG. 9 is a structure schematic diagram of an apparatus for configuring a NSAG illustrated according to an example embodiment in the present disclosure.

### DETAILED DESCRIPTION

Exemplary embodiments will be described herein in detail, examples of which are represented in the accompanying drawings. When the following description relates to the accompanying drawings, the same numerals in the different accompanying drawings indicate the same or similar elements unless otherwise indicated. The embodiments described in the following example embodiments do not represent all embodiments consistent with the present invention. Rather, they are only examples of devices and methods consistent with some aspects of the present invention as detailed in the appended claims.

The terms used in this disclosure are used only for the purpose of describing particular embodiments and are not intended to limit the present disclosure. The singular forms "a" and "the" used in this disclosure and the appended claims are also intended to include plural form, unless the context clearly indicates otherwise. It should also be understood that the term "and/or" as used herein refers to and includes any or all possible combinations of at least one of the listed items in association.

It should be understood that while the terms "first", "second", "third", etc. may be employed in the present disclosure to describe various types of information, such information should not be limited to these terms. These terms are only used to distinguish the same type of information from one another. For example, without departing from the scope of the present disclosure, first information may also be referred to as second information, and similarly, second information may be referred to as first information. Depending on the context, as used herein, the term "if" may be interpreted as "at ......" or "when ......" or "in response to determining".

The following first describes a network slice AS group (NSAG) referred to in this disclosure.

It should be noted that for ease of description, the present disclosure replaces the network slice AS group with a network slice group. That is, the network slice group in the present disclosure refers to the NSAG.

In Release 17 (R17), a NSAG mechanism is introduced to avoid security and signaling load problems associated with single network slice selection assistance information (S-NSSAI) broadcasting in a broadcast signaling.

From a view of a network device, a base station may provide a NSAG and a NSAG configuration supported by the base station to a terminal, which is used for the terminal to perform a slice-based cell reselection and to realize random access resource allocation enhancement. Meanwhile, a core network device may send NSAG information and an S-NSSAI to the terminal via a non-access stratum (NAS) signaling for the terminal to map a required S-NSSAI to a NSAG and perform a cell reselection and random access process based on the NSAG configuration. The NSAG information includes, but is not limited to, a mapping relationship between an S-NSSAI and a NSAG, a NSAG priority, and area information corresponding to the mapping relationship, and the area information includes, but is not limited to, the tracking are a identity (TAI).

From a view of the terminal, the terminal receives the S-NSSAI as well as the NSAG information from the core network device via the NAS signaling, and the NAS layer at the terminal side passes information of one or more slices (and/or information of a slice group) to an access stratum (AS), which is used for the AS to determine a NSAG identifier to be used for the cell selection and reselection.

During the slice-based random access process, a radio resource control (RRC) layer at the terminal side determines a NSAG related to a S-NSSAI triggering the random access and broadcasted in the system message (e.g., system information block (SIB1) based on the S-NSSAI (for triggering the random access), the mapping relationship between a S-NSSAI and a NSAG, and a NSAG priority provided by the higher layer, and selects a NSAG with a highest NSAG priority for the random access process. However, since the network device, e.g., a core network device, may configure NSAGs with an equal NSAG priority, i.e., two or more NSAGs with the same priority. Then, a plurality of candidate NSAGs may be determined based on a NSAG priority, and since the selected NSAGs affect a selection result of the random access resource, a process of determining the NSAG to be applied in the random access has to be optimized.

The equal NSAG priority means that the two or more NSAGs have the same or equal priority order.

In order to address the above technical issues, the present disclosure provides the following method and apparatus for determining and configuring a NSAG, and a storage medium.

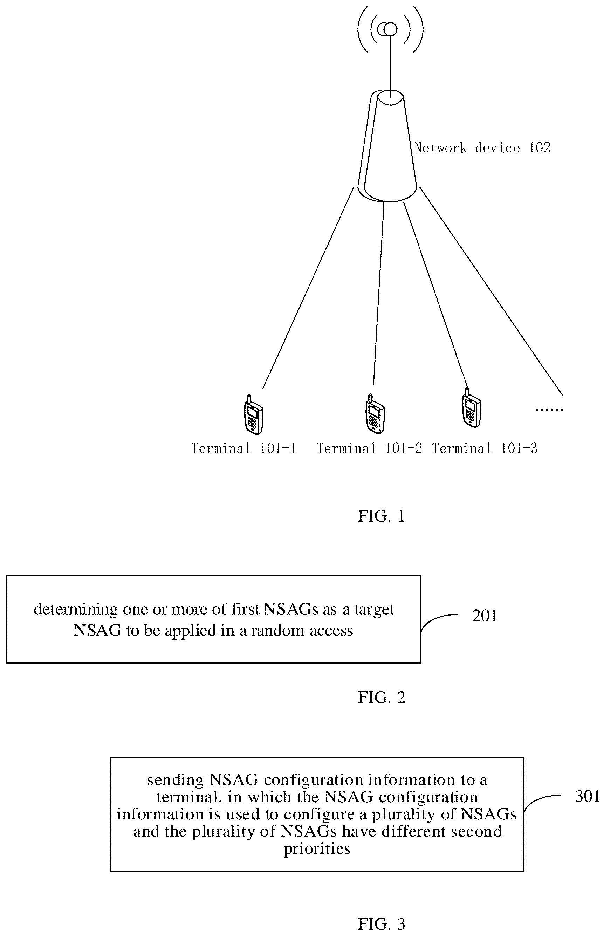

As shown in FIG. 1, a schematic diagram of a network architecture diagram to which the present disclosure applies. The network in the present disclosure may be a 4G network, a 5G network, a 6G network, or a future communication network, etc., which is not limited by the present disclosure, and the network architecture includes a terminal 101 and a network device 102.

The terminal 101 (included in FIG. 1 as 101-1, 101-2, 101-3 ......) may be a smartphone, a desktop computer, a laptop computer, a tablet computer, etc., and this disclosure is not limited thereto.

The network device 102, includes but is not limited to a base station, an access network device, etc., in which the base station may be a 4G base station, a 5G base station, or a future 6G base station, and the access network device may be a 4G access network device, a 5G access network device, or a future 6G access network device, etc., as the present disclosure does not limit. In an embodiment, the network device 102 may also include a core network device, such as an authentication management function (AMF), and the like.

In some embodiments, a first NSAG is a candidate NSAG for the random access.

In an embodiment, the first NSAG may be determined by a RRC layer at the terminal side.

The terminal 101 may determine a NSAG associated with an S-NSSAI for triggering the random access, included in a system message, and having a third priority satisfying a preset condition as the first NSAG.

The system message includes, but is not limited to, a system information block (SIB), such as SIBn, where n is a positive integer. The NSAG included in the system message may be a NSAG broadcasted via the SIB.

The third priority is used to determine one or more of the first NSAGs. The third priority may be configured for the terminal by the network device 102 via NSAG configuration information, and the network device includes, but is not limited to, a base station, a core network device, and the like. It is noted that the third priority is a NSAG priority in the existing mechanism, configured by the network device such as a base station or a core network device, and may include equal NSAG priority. The third priority is used for the terminal to determine one or more of the first NSAGs.

The preset condition may be that the NSAG has a higher NSAG priority (in this case, the third priority) relative to the other NSAGs determined.

For example, the NSAGs associated with the S-NSSAI for triggering the random access and included in the system message include NSAG#1, NSAG#2, and NSAG#3, in which NSAG#1 has a higher priority than the NSAG#2 and the NSAG#3, and the terminal determines the NSAG#1 as the first NSAG.

As another example, the NSAGs associated with a S-NSSAI for triggering the random access and included in the system message include NSAG#1, NSAG#2, and NSAG#4, in which the NSAG#1 and the NSAG#4 are NSAGs with the equal NSAG priority and have a higher priority than the NSAG#2, and the terminal determines the NSAG#1 and NSAG#4 as the first NSAGs.

In some embodiments, the terminal 101 may, after determining the first NSAGs, determine one or more of the first NSAGs as a target NSAG to be applied in the random access.

In an embodiment, the terminal 101, after determining the first NSAGs, may determine all of the first NSAGs as the target NSAG.

In an embodiment, the terminal 101, after determining the first NSAGs, may determine one or more of the first NSAGs as the target NSAG, which also includes the case that the terminal determines all of the first NSAGs as the target NSAG.

In some embodiments, the network device 102 may send NSAG configuration information to the terminal 101, the NSAG configuration information is used to configure a plurality of NSAGs, and the plurality of NSAGs have different second priorities. A second priority is used to determine one of the first NSAGs.

Accordingly, the terminal 101 may determine a NSAG associated with an S-NSSAI triggering the random access, included in a system message, and having a second priority satisfy a preset condition as the first NSAG based on the NSAG configuration information.

The preset condition may be that the NSAG has a higher NSAG priority (in this case, the second priority) than the other NSAGs determined.

The manner of determining the first NSAG herein is similar to the manner of determining the first NSAG based on the first priority as described above and will not be repeated herein.

Since the second priorities of the plurality of NSAGs are different, if the number of the first NSAGs determined by the terminal 101 is 1, the first NSAG can be directly determined as the target NSAG.

For example, the NSAGs associated with the S-NSSAI for triggering the random access and included in the system message include NSAG#1, NSAG#2, and NSAG#3, in which the network device 102 configure the above three NSAGs via NSAG configuration information, and the three NSAGs correspond to different second priorities respectively. The terminal determines that the priority of the NSAG#1 is higher than that of the NSAG#2 and NSAG#3, and then the terminal determines the NSAG#1 as the first NSAG.

In the above embodiment, the terminal may determine one or more of the first NSAGs as a target NSAG to be applied in the random access. This clarifies the behavior of the terminal in selecting the target NSAG to be applied in the random access, thereby improving the reliability of the random access resource selection.

The method for determining a NSAG provided by the present disclosure is first described below from the view of the terminal.

Embodiments of the present disclosure provide a method for determining a NSAG, referring to FIG. 2. FIG. 2 is a flowchart of a method for determining a NSAG according to an embodiment illustrated in FIG. 2. The method may be performed by a terminal and may include the following steps.

In step 201, one or more of first NSAGs are determined as a target NSAG to be applied in a random access.

In embodiments of the present disclosure, a first NSAG is a candidate NSAG for the random access.

In an embodiment, the first NSAG may be determined by a RRC layer at the terminal side.

In a possible implementation, a number of the first NSAGs may be one or more.

In a possible implementation, the first NSAG satisfies at least one of: associated with an S-NSSAI triggering the random access; included in a system message; or having a third priority satisfying a preset condition.

A NSAG associated with the S-NSSAI triggering the random access is a NSAG visible at the RRC layer.

The system message includes, but is not limited to, a SIB, such as SIBn, where n is a positive integer. A NSAG included in the system message may be a NSAG broadcasted via the SIB.

The third priority is used to determine one or more of the first NSAGs. The third priority may be configured for the terminal by a network device via NSAG configuration information, and the network device includes, but is not limited to, a base station or a core network device, and the like. It is to be noted that the third priority is a NSAG priority in the existing mechanism, configured by the network device such as the base station or the core network device, and may include an equal priority. Accordingly, the terminal determines one or more of the first NSAGs in accordance with the third priority.

The manner in which the terminal determines the first NSAGs has been described in the above embodiments and will not be repeated here.

In embodiments of the present disclosure, a target NSAG to be applied in the random access is a NSAG determined by the RRC layer at the terminal side from the first NSAGs and provided by the RRC layer to the MAC layer for the random access configuration selection.

In a possible implementation, the number of the first NSAGs is 1 and the terminal directly determines the first NSAG as the target NSAG.

In an embodiment, the network device may send NSAG configuration information to the terminal. The NSAG configuration information may configure NSAGs with the equal priority (the third priority) for the terminal, but the RRC layer at the terminal side determines that there is only one NSAG associated with the S-NSSAI triggering the random access, included in the system message, and having the third priority satisfying the preset condition, i.e., the number of the first NSAGs is 1. The terminal directly determines the first NSAG as the target NSAG.

In an embodiment, the network device may send NSAG configuration information to the terminal. The NSAG configuration information configures a plurality of NSAGs for the terminal, and the plurality of NSAGs have different second priorities. A second priority is used to determine one of the first NSAGs. The NSAGs configured by the network device do not include the NSAGs with the equal priority. i.e., the NSAG priorities are configured in a manner similar to existing mechanisms, except that the network device, e.g., a core network device, interacts with the base station by signaling and configures the terminal with NSAGs that do not include the NSAGs with the equal priority.

Accordingly, since the network device does not configure the NSAGs with the equal priority, the RRC layer at the terminal side determines that there is only one NSAG associated with the S-NSSAI triggering the random access, included in the system message, and having a second priority satisfying the preset condition, i.e., the number of first NSAGs is likewise 1. The terminal directly determines the first NSAG as the target NSAG.

In another possible implementation, there are multiple first NSAGs, and the terminal may determine all of the first NSAGs as the target NSAG.

In another possible implementation, there are multiple first NSAGs, and the terminal determines one or more of the first NSAGs as the target NSAG. The terminal may determine all of the multiple first NSAGs as the target NSAG.

In a possible implementation, the terminal may determine one or more of the first NSAGs as the target NSAG in accordance with at least one of: a protocol agreement, a terminal policy, or indication information sent by the network device.

In an example, the terminal policy may be formulated by the terminal according to its own service needs. For example, in case the network device configures the NSAGs with the equal priority (the third priority), the terminal policy may be that one or more of the first NSAGs are determined as the target NSAGs or all of the first NSAGs are determined as the target NSAG, etc., and the specific policy content of the present disclosure is not limited herein.

In an example, the indication information sent by the network device may be used to indicate at least one of: NSAG information or NSAG random access configuration information.

The NSAG information may include, but is not limited to, a NSAG priority. The NSAG priority is used to configure a first priority for multiple first NSAGs.

It is noted that here the first priority is used to determine the target NSAG. The terminal may determine the first NSAG having the first priority satisfying a preset condition as the target NSAG.

The predetermined condition may be that a NSAG (here, the first NSAG) has a higher NSAG priority (i.e., the first priority) than the other NSAGs determined (here, the other first NSAGs).

For example, the first NSAGs include NSAG#1 and NSAG#2, the NSAG priority indicates that the priority of the NSAG#1 is higher than the priority of the NSAG#2, and the terminal determines the NSAG#1 as the target NSAG.

The first priority is a NSAG priority additionally configured by the network device for the multiple first NSAGs, and is a different from the previously mentioned third priority. The first priority may be configured only for the multiple first NSAGs determined by the terminal, or may be additionally defined for a NSAG priority in existing mechanisms. The first priority may or may not include the equal priority, which is not limited by the present disclosure.

For example, in accordance with the NSAG configuration information previously sent by the network device, the terminal determines NSAG#1, NSAG#3, and NSAG#4 included in the first NSAGs, and the network device configures the first priority for the NSAG#1, NSAG#3, and NSAG#4 via the NSAG priority. Assuming that the NSAG priority indicates that the NSAG#1 has a higher first priority than those of the NSAG#3 and NSAG #4, the terminal may determine the NSAG#1 as the target NSAG.

Alternatively, the NSAG priority indicates that the NSAG#1 and NSAG#3 are the NSAGs with the equal NSAG priority and have a higher first priority than the NSAG#4, then the terminal may determine the NSAG#1 and NSAG#3 as the target NSAG.

The NSAG random access configuration information includes, but is not limited to, at least one of: random access resource partition configuration information, or random access priority configuration information.

The random access priority configuration information may include, but is not limited to, at least one of: a priority for a fallback indication scaling factor; a priority for a power creep step; a priority for a random access resource partition; a priority for a feature; or a priority for a combination of features, which is not limited by this disclosure.

The terminal may determine the target NSAG based on the above NSAG random access configuration information.

For example, the random access resource partition configuration information includes:
random access resource partition #1 is associated with NSAG #1;
random access resource partition #2 is associated with NSAG#1 and NSAG#2.

The first NSAGs include NSAG#1, NSAG#2, and the terminal determines a target NSAG based on a number of random access resource partitions, and the terminal may determine the first NSAG corresponding to a largest number of associated random access resource partitions as the target NSAG, and specifically may determine the NSAG#1 as the target NSAG.

In one example, the terminal may determine the target NSAG in accordance with two or three of the protocol agreement, the terminal policy, and the indication information sent by the network device together.

In an embodiment, according to the protocol, the terminal determines the target NSAG in accordance with the terminal policy, and the terminal policy is that all of the first NSAGs are determined as the target NSAG, and then the terminal determines all of the first NSAGs as the target NSAG.

In an embodiment, the terminal determines the NSAG#1 in the first NSAGs as the target NSAG based on the indication information sent by the network device. According to the terminal policy, the network device configures NSAGs with the equal priority, the target NSAG is determined based on the indication information sent by the network device and the terminal determines the NSAG#1 as the target NSAG.

In an embodiment, according to the protocol, the terminal determines the target NSAG in accordance with the indication information sent by the network device, and the terminal determines that all of the first NSAGs are determined as the target NSAG in accordance with the indication information sent by the network device. In this case, the terminal determines all of the first NSAGs as the target NSAG in accordance with the protocol agreement and the terminal policy.

In an embodiment, according to the protocol, the terminal determines the target NSAG in accordance with the indication information sent by the network device and the terminal policy together, and the terminal determines all of the first NSAGs as the target NSAG based on the indication information sent by the network device. The terminal policy is that all of the first NSAGs are determined as the target NSAG in case that the network device configures the NSAGs with the equal priority (determined in accordance with the third priority); all of the first NSAGs are determined as the target NSAG in accordance with the indication message and the terminal policy in case that the terminal determines that the network device configures NSAGs with the equal priority (determined in accordance with the third priority).

The above is only an example illustration, and the manner in which the terminal determines all of the first NSAGs as the target NSAG to be applied in the random access in accordance with at least one of the protocol agreement, the terminal policy, or the indication information sent by the network device shall fall within the scope of protection of the present disclosure.

In a possible implementation, the target NSAG may satisfy at least one of the following: fully aligning with a NSAG associated with the random access configuration information; having a highest first priority; corresponding to a largest number of random access resource partitions; corresponding to a random access resource partition including a largest number of features; or corresponding to a random access resource partition including a highest feature priority.

The first priority is used to determine the target NSAG.

It should be noted that here the first priority, i.e. the NSAG priority additionally configured by the network device for the multiple first NSAGs, is different from the previously mentioned third priority. The second priority may be configured only for the multiple first NSAGs determined by the terminal, or may be additionally defined for a NSAG priority in existing mechanisms. The first priority may or may not include the equal priority, and the present disclosure does not limit this.

The features include, but are not limited to, at least one of the following: small data transmission (SDT); radio network slicing (RAN Slicing); coverage enhancement (CE); reduced capacity (REDCAP); or other NSAGs.

The other NSAGs herein may be other NSAGs different from the first NSAGs.

In one example, the target NSAG may be a first NSAG fully aligning with the NSAG associated with the random access configuration information.

For example, the random access configuration information includes:
random access resource partition #1 is associated with NSAG #1;
random access resource partition #2 is associated with NSAG#1 and NSAG#2.

The first NSAGs include NSAG#1 and NSAG#2, and then the terminal determines that the target NSAG to be applied in the random access includes the NSAG#1 and NSAG#2.

In an example, the target NSAG may be a first NSAG having the first priority satisfying the preset condition.

For example, the first NSAGs include NSAG#1 and NSAG#2, in which the NSAGs having the first priority satisfying the preset condition include NSAG#1 and NSAG#2, and the terminal directly determines the NSAG#1 and NSAG#2 as the target NSAG to be applied in the random access.

In one example, the target NSAG may be the first NSAG corresponding to a largest number of random access resource partitions.

For example, the random access configuration information includes:
random access resource partition #1 is associated with NSAG #1;
random access resource partition #2 is associated with NSAG#1 and NSAG#2.

The first NSAGs include NSAG#1 and NSAG#2, the number of random access resource partitions corresponding to NSAG#1 is 2, and the number of random access resource partitions corresponding to NSAG#2 is 1. Then the terminal determines that the target NSAG to be applied in the random access is the NSAG#1.

In one example, the target NSAG may be a first NSAG corresponding to a random access resource partition including a largest number of features.

For example, the random access configuration information includes:
random access resource partition #1 is associated with NSAG #1, and the features included are CE and REDCAP;
random access resource partition #2 is associated with NSAG #2 and the features included are SDT and RAN Slicing.

The first NSAGs include NSAG#1 and NSAG#2, the number of features included in the random access resource partition corresponding to NSAG#1 is 2, and the number of features included in the random access resource partition corresponding to NSAG #2 is 2. Then the terminal determines that the target NSAGs to be applied in the random access are the NSAG#1 and NSAG#2.

In one example, the target NSAG may be a first NSAG corresponding to a random access resource partition including a highest feature priority.

For example, the random access configuration information includes:
random access resource partition #1 is associated with NSAG #1 and the feature included is CE;
random access resource partition #2 is associated with NSAG #2 and the features included are SDT and RAN Slicing.

CE has the highest feature priority.

The first NSAGs include NSAG#1and NSAG#2, and then the terminal determines that the target NSAG to be applied in the random access is the NSAG#1.

In embodiments of the present disclosure, a feature may also refer to a combination of two or more of the features, and the terminal correspondingly determines the target NSAG in a manner similar to that described above for determining the target NSAG based on the number of the features or the priority of the features, which will not be repeated herein.

In an example, the target NSAG may be a first NSAG satisfying at least two of the above conditions.

For example, the target NSAG may be the first NSAG fully aligning with the NSAG associated with the random access configuration information and corresponding to the largest number of random access resource partitions.

Further for example, the target NSAG may be the first NSAG fully aligning with the NSAG associated with the random access configuration information and corresponding to the random access resource partition including the largest number of features.

As another example, the target NSAG may be the first NSAG corresponding to the random access resource partition including the largest number of features and the highest feature priority.

Again, for example, the target NSAG may be the first NSAG satisfying all of the above conditions.

The above is only an example illustration, and the conditions for the target NSAG may also be other conditions, which are not limited by the present disclosure.

In the above embodiment, the terminal may determine one or more of the first NSAGs as the target NSAG to be applied in the random access. This clarifies the behavior of the terminal in selecting the target NSAG to be applied in the random access, thereby improving the reliability of the random access resource selection.

A method of configuring a NSAG provided by the present disclosure is described below from a view of a network device.

Embodiments of the present disclosure provide a method for configuring a NSAG, as shown with reference to FIG. 3, which is a flowchart of a method for configuring a NSAG illustrated according to an embodiment, which may be performed by a network device including, but not limited to, a base station, an access network device, and so on, in which the base station may be a 4G base station, a 5G base station, or a future 6G base station, and the access network device may be a 4G access network device, a 5G access network device or a future 6G access network device, etc., and the present disclosure is not limited thereto. Optionally, the network device may further comprise a core network device, and the method may include the following steps.

In step 301, NSAG configuration information is sent to a terminal, in which the NSAG configuration information is used to configure a plurality of NSAGs, and the plurality of NSAGs have different second priorities.

In embodiments of the present disclosure, it may be specified by a protocol that the network device is not allowed to configure the NSAGs with an equal priority for the terminal.

The network device may send to the terminal NSAG configuration information used to configure the plurality of NSAGs with different second priorities. That is, the NSAG priority is configured in a manner similar to existing mechanisms, but the network device, such as a core network device, interacts with the base station by signaling to configure the terminal with the NSAGs that do not include the NSAGs with the equal priority.

Accordingly, the terminal determines that the first NSAG satisfies at least one of: associated with an S-NSSAI triggering the random access; included in a system message; or having a second priority satisfying a preset condition.

The NSAG associated with the S-NSSAI trigging the random access is the NSAG visible at the RRC layer.

The system message includes, but is not limited to, a SIB, such as SIBn, where n is a positive integer. The NSAG included in the system message may be a NSAG broadcasted via the SIB.

The second priority is used to determine one of the first NSAGs.

The network device may configure the second priority for the terminal via the NSAG configuration information, and the network device includes, but is not limited to, a base station, a core network device, and the like. Since the network device configures the plurality of NSAGs having different second priorities, the terminal determines that the number of the first NSAGs having the second priority satisfying the preset condition is 1, and the terminal directly determines the first NSAG as the target NSAG to be applied in the random access.

The first NSAG is a candidate NSAG for the random access.

In an embodiment, the first NSAG may be determined by the RRC layer at the terminal side. The manner of determining the first NSAG has been described above and will not be repeated here.

In embodiments of the present disclosure, the target NSAG to be applied in the random access is the NSAG determined by the RRC layer at the terminal side from the first NSAGs and provided by the RRC layer to the MAC for the random access configuration selection.

In the above embodiment, the network device may configure the terminal with the plurality of NSAGs having different second priorities such that the number of the first NSAGs determined by the terminal is 1. The reliability of the random access resource selection is improved.

In some optional embodiments, the network device may also send indication information to the terminal that is used by the terminal to determine the target NSAG for the random access from the multiple first NSAGs.

In embodiments of the present disclosure, the first NSAG is a candidate NSAG for the random access.

In an embodiment, the first NSAG may be determined by the RRC layer at the terminal side.

In embodiments of the present disclosure, the target NSAG to be applied in the random access is a NSAG determined by the RRC layer at the terminal side from the first NSAGs and provided by the RRC layer to the MAC for the random access configuration selection.

The indication information may be used to indicate at least one of: the NSAG information; or the NSAG random access configuration information.

In an embodiment, the NSAG information includes a NSAG priority, and the NSAG priority is used to configure a first priority for the multiple first NSAGs.

The first priority is used to determine the target NSAG.

It should be noted that here the first priority, i.e., the NSAG priority additionally configured by the network device for the multiple first NSAGs, is different from the third priority in the related art mentioned before. The first priority may be configured only for the multiple first NSAGs determined by the terminal, or may be additionally defined for the NSAG priority in the existing mechanisms. The first priority may or may not include the equal priority, which is not limited by the present disclosure.

In an embodiment, the NSAG random access configuration information includes at least one of: random access resource partition configuration information; or random access priority configuration information.

The random access priority configuration information may be a priority for a random access resource partition, and/or a priority for a random access feature and/or a combination of features, to which the present disclosure is not limited.

The manner in which the terminal determines the target NSAG from the multiple NSAGs based on the indication information, or in combination with a protocol agreement and a terminal policy has been described on the terminal and will not be repeated here.

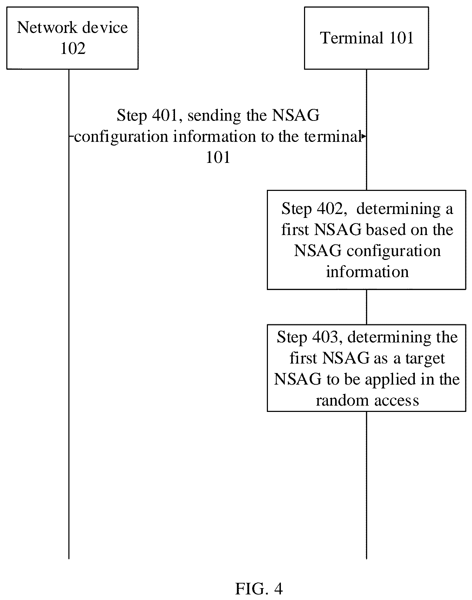

In some embodiments, with reference to FIG. 4, which is a flowchart of a method for determining a NSAG according to an embodiment, the method may be applicable in the system shown in FIG. 1 and may include the following steps.

In step 401, a network device 102 sends NSAG configuration information to a terminal 101, in which the NSAG configuration information is used to configure a plurality of NSAGs, and the plurality of NSAGs have different second priorities.

In embodiments of the present disclosure, a second priority is used to determine one of first NSAGs.

In embodiments of the present disclosure, it may be specified by a protocol that the network device is not allowed to configure NSAGs with an equal priority for the terminal.

The network device may send the NSAG configuration information to the terminal, which is used to configure multiple NSAGs with different second priorities. The NSAGs configured by the network device do not include the NSAGs with the equal priority, i.e., the second priorities are configured in a manner similar to the existing mechanism, except that the network device, e.g., the core network device, interacts with the base station by signaling, and configures for the terminal with the NSAGs that do not include the NSAGs with the equal priority.

In step 402, the terminal 101 determines a first NSAG based on the NSAG configuration information.

In embodiments of the present disclosure, the first NSAG is a candidate NSAG for the random access.

In one example, the first NSAG may be determined by a RRC layer at the terminal side.

In embodiments of the present disclosure, the first NSAG satisfies at least one of: associated with an S-NSSAI triggering the random access; included in a system message; or having a second priority satisfying a preset condition.

The preset condition may be that the NSAG has a higher NSAG priority (in this case, the second priority) than the other NSAGs determined.

Since the network device configures a plurality of NSAGs having different second priorities, the terminal determines that the number of the first NSAGs having the second priority satisfying the preset condition is 1.

In step 403, the terminal determines the first NSAG as a target NSAG to be applied in a random access.

In embodiments of the present disclosure, the target NSAG to be applied in the random access is the NSAG determined by the RRC layer at the terminal side from first NSAGs and provided by the RRC layer to the MAC for the random access configuration selection.

Since the number of the first NSAGs is 1, the terminal uses it directly as the target NSAG to be applied in the random access.

In the above embodiments, the behavior of the terminal in selecting the target NSAG to be applied in the random access is clarified, which improves the reliability of the random access resource selection.

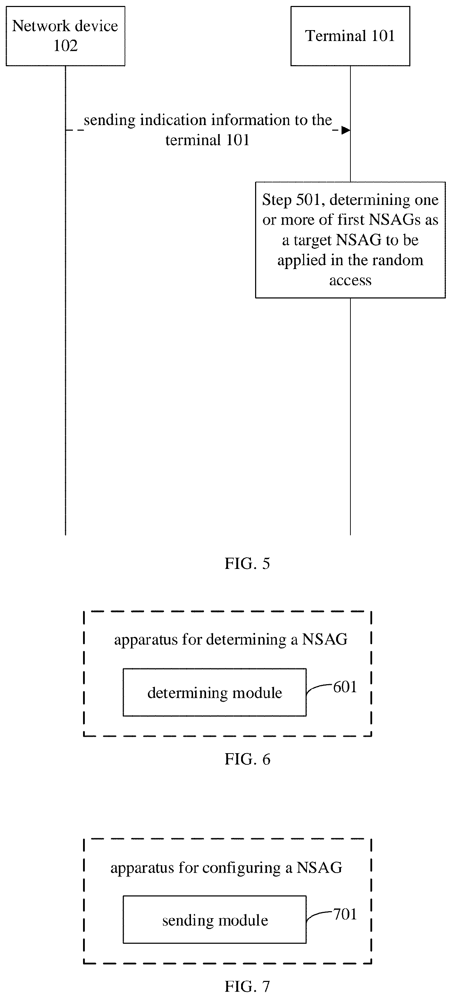

In some embodiments, with reference to FIG. 5, which is a flowchart of a method for determining a NSAG illustrated according to an embodiment, the method may also be applicable in the system illustrated in FIG. land may include the following steps.

In step 501, a terminal 101 determines one or more of first NSAGs as a target NSAG to be applied in a random access.

In embodiments of the present disclosure, the network device is allowed to configure NSAGs with an equal priority.

In embodiments of the present disclosure, the first NSAGs satisfy at least one of: associated with an S-NSSAI triggering the random access; included in a system message; or having a third priority satisfying a preset condition.

It should be noted that the third priority here is a NSAG priority in existing mechanisms, and the third priority may be configured by the network equipment such as a base station or a core network device, and may include a NSAG priority such as the equal priority. Accordingly, the terminal determines one or more of the first NSAGs in accordance with the third priority.

The number of the first NSAGs determined by the terminal may be one or more, and the present disclosure is not limited thereto.

In embodiments of the present disclosure, the target NSAG to be applied in the random access is the NSAG determined by the RRC layer at the terminal side from the first NSAGs and provided by the RRC layer to the MAC for the random access configuration selection.

In embodiments of the present disclosure, the terminal may determine one or more of the first NSAGs as the target NSAG based on at least one of a protocol agreement, a terminal policy, or indication information sent by the network device.

The specific implementation is similar to step 201 above and will not be repeated here.

In the above embodiment, the target NSAG to be applied in the random access can be determined by the terminal from the first NSAGs, which clarifies the behavior of the terminal in selecting the target NSAG to be applied in the random access, and improves the reliability of the random access resource selection.

Further examples of the above schemes are described below.

Option 1: do not allow the network device to configure the NSAGs with the equal priority.

The terminal determines the first NSAG associated with the S-NSSAI triggering the random access, included in the system message, and having the second priority satisfying the preset condition, as the target NSAG to be applied in the random access.

The second priority is used to determine the first NSAG. The manner in which the first NSAG is determined herein has been described above and will not be repeated herein.

The second priority is configured in a manner similar to existing mechanisms, but the network device, such as a core network device, interacts with the base station by signaling and configures the terminal with the NSAGs that does not include NSAGs with the equal priority.

Option 2: if there is multiple first NSAGs, the terminal determines all of the first NSAGs or one or more of the first NSAGs as the target NSAG to be applied in the random access.

Determining one or more of the first NSAGs as the target NSAG to be applied in the random access comprises at least one of:
the terminal determines one or more of the first NSAGs as the target NSAG to be applied in the random access according to the terminal policy;
the terminal determines one or more of the first NSAGs as the target NSAG to be applied in the random access based on the indication information sent by the network device; or
the terminal determines the one or more of the first NSAGs as the target NSAG to be applied in the random access based on the protocol agreement.

The indication information may be used to indicate at least one of: the NSAG information; or the NSAG random access configuration information.

In one example, the NSAG information includes a NSAG priority, and the NSAG priority is used to configure a first priority for the multiple first NSAGs.

The first priority is used to determine the target NSAG.

It should be noted that here the first priority, i.e., the NSAG priority additionally configured by the network device for the multiple first NSAGs, is different from the third priority in the related art mentioned before. The first priority may be configured only for the multiple first NSAGs determined by the terminal, or may be additionally defined for the NSAG priority in the existing mechanisms. The first priority may or may not include the equal priority, which is not limited by the present disclosure.

In one example, the NSAG random access configuration information includes at least one of: random access resource partition configuration information; or random access priority configuration information.

In embodiments of the present disclosure, if there are multiple first NSAGs, optionally, the terminal may further determine one or more of the first NSAGs as the target NSAG to be applied in the random access based on the terminal policy, the protocol agreement, and/or the indication information described above.

For example, the terminal determines the target NSAG based on the random access resource partition configuration information in the system message, and the target NSAG satisfies at least one of:
fully aligning with a NSAG associated with random access configuration information;
having a first priority satisfying a preset condition;
corresponding to a largest number of random access resource partitions;
corresponding to a random access resource partition including a largest number of features; or
corresponding to a random access resource partition including a highest feature priority.

The preset condition may be that the NSAG (here the first NSAG) has a higher corresponding NSAG priority (here the first priority) than the other NSAGs determined (here the other first NSAGs).

For example, if a combination of multiple first NSAGs of the first NSAGs is capable of being fully aligning with a NSAG associated with the random access configuration information, the multiple first NSAGs fully aligning with the NSAG are determined as the target NSAG to be applied in the random access.

For example, it is assumed that the first NSAGs include NSAG#1, NSAG#2, and the random access resource partitioning configuration includes random access resource partition #1 is associated with NSAG#1 and random access resource partition #2 is associated with NSAG#1 and NSAG#2.

The terminal may determine the NSAG#1 and NSAG#2, which are fully aligning with the NSAG associated with the random access configuration information, as the target NSAG.

For example, it is assumed that the first NSAGs include NSAG#1, NSAG#2, and the random access resource partitioning configuration includes random access resource partition #1 is associated with NSAG#1 and random access resource partition #2 is associated with NSAG#1 and NSAG#2.

The terminal determines the target NSAG in accordance with the number of corresponding random access resource partitions, and then the terminal may determine the NSAG#2 as the target NSAG.

Of course, the terminal may also determine the target NSAG in accordance with other conditions, and the present disclosure does not limit this.

One possible embodiment is as follows.

If there are multiple first NSAGs associated with the S-NSSAI triggering the random access, included in the system message, and having a third priority satisfying the preset condition, the terminal determines, from the first NSAGs, the target NSAG to be applied in the random access.

In one example, the terminal determines all of the first NSAGs as the target NSAG.

In one example, the terminal determines one or more of the first NSAGs as the target NSAG, which specifically may include:
the terminal determines one or more of the first NSAGs as the target NSAG based on a terminal measurement;
the terminal determines one or more of the first NSAGs as the target NSAG based on indication information sent by the network device;
the terminal determines one or more of the first NSAGs as the target NSAG based on the protocol agreement.

The indication information may be used to indicate at least one of: the NSAG information; or the NSAG random access configuration information.

The NSAG information includes the NSAG priority, which is used to configure the first priority for the multiple first NSAGs.

The first priority is used to determine the target NSAG.

It should be noted that here the first priority, i.e., the NSAG priority additionally configured by the network device for the multiple first NSAGs, is different from the third priority in the related art mentioned before. The first priority may be configured only for the multiple first NSAGs determined by the terminal, or it may also be additionally defined for the NSAG priority in the existing mechanism. The first priority may or may not include the equal priority, which is not limited by the present disclosure.

NSAG random access configuration information includes at least one of: random access resource partition configuration information; or random access priority configuration information.

In one example, the first priority of the NSAG priority configuration includes the equal priority, and the terminal determines one or more of the first NSAG having the first priority satisfying the preset condition as the target NSAG.

In one example, if the first priority of the NSAG priority configuration does not include the equal priority, the terminal may determine a first NSAG having the first priority satisfying the preset condition as the target NSAG.

If the NSAG priority indicates the equal priority, the terminal determines, in accordance with the first priority, among the multiple first NSAGs, that the multiple first NSAGs having the first priority satisfying the preset condition may all be used as the target NSAG. Optionally, further, the terminal may determine, based on the terminal policy or other indication information content (e.g., random access resource partition configuration information, etc.), one or more of the first NSAGs as the target NSAG.

In one example, the indication information includes random access resource partition configuration information broadcasted in the system message, and the terminal determines one or more of the first NSAGs as the target NSAG based on the random access resource partition configuration information, and the determined target NSAG satisfies at least one of:
fully aligning with the NSAG associated with the random access configuration information;
having a first priority satisfying a preset condition;
corresponding to a largest number of random access resource partitions;
corresponding to a random access resource partition including a largest number of features; or
corresponding to a random access resource partition including a highest feature priority.

For example, if a combination of the multiple first NSAGs can be fully aligning with the NSAG associated with the random access configuration information, the multiple first NSAGs are determined as the target NSAG; otherwise, one of the first NSAGs may be determined as the target NSAG.

Based on the above, if only one first NSAG satisfies at least one of the above conditions, the terminal determines that one first NSAG as the target NSAG, and if multiple first NSAGs satisfy at least one of the above conditions, the terminal determines the multiple first NSAGs satisfying the at least one of the above conditions as the target NSAG, or further, the terminal determines one unique first NSAG further based on the terminal policy and/or other indication information (e.g., the first priority) and uses it as the target NSAG to be applied in the random access.

In the above embodiment, the terminal may determine one or more of the first NSAGs as the target NSAG to be applied in the random access. This clarifies the behavior of the terminal in selecting the target NSAG to be applied in the random access, thereby improving the reliability of the random access resource selection.

Corresponding to the foregoing method embodiments of application function implementation, the present disclosure also provides apparatus embodiments of application function implementation.

Referring to FIG. 6, FIG. 6 is a block diagram of an apparatus for determining a NSAG according to an exemplary embodiment. The apparatus is applied to a terminal and includes a determining module 601.

The determining module 601 is configured to determine one or more first NSAGs as a target NSAG to be applied in a random access.

Referring to FIG. 7, FIG. 7 is a block diagram of an apparatus for configuring a NSAG according to an exemplary embodiment. The apparatus is applied to a network device and includes a sending module 701.

The sending module 701 is configured to send NSAG configuration information to a terminal, in which the NSAG configuration information is used to configure a plurality of NSAGs, the plurality of NSAGs have different second priorities and a second priority is used to determine one of the first NSAGs.

Regarding apparatus embodiments, as they essentially correspond to method embodiments, reference may be made to the relevant descriptions in the method embodiments section. The above-described apparatus embodiments are merely schematic, in which the above-described modules illustrated as separated components may or may not be physically separated, and the components displayed as modules may or may not be physical modules, i.e., they may be located in one place or may be distributed to a plurality of network modules. Some or all of these modules can be selected to fulfill the purpose of the presently disclosure according to actual needs. It can be understood and implemented by a person of ordinary skill in the art without an inventive step.

Accordingly, the present disclosure also provides a computer-readable storage medium, the storage medium stores a computer program, and the computer program is used to perform any method for determining the NSAG at the terminal side as described above.

Accordingly, the present disclosure also provides a computer-readable storage medium, the storage medium stores a computer program, and the computer program is used to perform any method for configuring the NSAG at the network device side as described above.

Accordingly, the present disclosure also provides a device for determining a NSAG, includes:
a processor;
a memory for storing instructions executable by the processor;
in which the processor is configured for performing any method for determining the NSAG at the terminal side as described above.

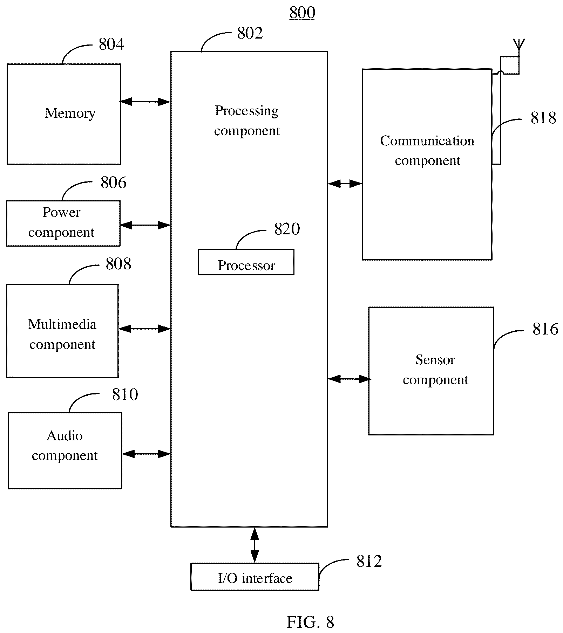

FIG. 8 is a block diagram of an apparatus 800 for determining the NSAG according to an exemplary embodiment. The apparatus 800 may be, for example, a terminal such as a cell phone, a tablet computer, an e-book reader, a multimedia playing device, a wearable device, an in-vehicle user device, an iPad, a smart TV, and the like.

Referring to FIG. 8, the apparatus 800 may include one or more of the following components: a processing component 802, a memory 804, a power component 806, a multimedia component 808, an audio component 810, an input/output (I/O) interface 812, a sensor component 816, and a communication component 818.

The processing component 802 generally controls the overall operation of the apparatus 800, such as operations associated with display, telephone calling, data random access, camera operation, and recording operations. The processing component 802 may include one or more processors 820 to execute instructions to accomplish all or some of the steps of the method of determining a NSAG described above. In addition, the processing component 802 may include one or more modules to facilitate interactions between the processing component 802 and other components. For example, the processing component 802 may include a multimedia module to facilitate interactions between the multimedia component 808 and the processing component 802. As another example, the processing component 802 may read executable instructions from a memory to implement the steps of a method of determining a NSAG provided by the embodiments described above.

The memory 804 is configured to store various types of data to support operation at the apparatus 800. Examples of such data include instructions for any application or method operated on the apparatus 800, contact data, phone book data, messages, pictures, videos, etc. The memory 804 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, a disk or an optical disk.

The power component 806 provides power to various components of the apparatus 800. The power component 806 may include a power management system, one or more power sources, and other components associated with generating, managing, and distributing power for the apparatus 800.

The multimedia component 808 includes a display providing an output interface between the apparatus 800 and the user. In some embodiments, the multimedia component 808 includes a front camera and/or a rear camera. The front camera and/or the rear camera may receive external multimedia data when the apparatus 800 is in an operational mode, such as a shooting mode or a video mode. Each front camera and rear camera may be a fixed optical lens system or has a focal length and optical zoom capability.

The audio component 810 is configured to output and/or input audio signals. For example, the audio component 810 includes a microphone (MIC) that is configured to receive external audio signals when the apparatus 800 is in an operational mode, such as a call mode, a recording mode, or a voice recognition mode. The received audio signals may be further stored in memory 804 or sent via communication component 818. In some embodiments, the audio component 810 further includes a speaker for outputting audio signals.

The I/O interface 812 provides an interface between the processing component 802 and a peripheral interface module. The peripheral interface module may be a keypad, a click wheel, a button, and the like. These buttons may include, but are not limited to: a home button, a volume button, a start button, or a lock button.

The sensor component 816 includes one or more sensors for providing an assessment of various aspects of the status of the apparatus 800. For example, the sensor component 816 may detect an on/off state of the apparatus 800, a relative positioning of components, such as the components being the display and keypad of the apparatus 800, and the sensor component 816 may also detect a change in the position of the apparatus 800 or one of the components of the apparatus 800, a presence or absence of user contact with the apparatus 800, an orientation or acceleration/deceleration of the apparatus 800 and a temperature change of the apparatus 800. The sensor component 816 may include a proximity sensor configured to detect a presence of a nearby object in the absence of any physical contact. The sensor component 816 may also include a light sensor, such as a CMOS or CCD image sensor, for use in imaging applications. In some embodiments, the sensor component 816 may also include an acceleration sensor, a gyroscope sensor, a magnetic sensor, a pressure sensor, or a temperature sensor.

The communication component 818 is configured to facilitate communications between the apparatus 800 and other devices in a wired or wireless manner. The apparatus 800 may access a wireless network based on a communication standard, such as Wi-Fi, 2G, 3G, 4G, 5G or 6G, or a combination thereof. In an example embodiment, the communication component 818 receives broadcast signals or broadcast-related information from an external broadcast management system via a broadcast channel. In an example embodiment, the communication component 818 further includes a near field communication (NFC) module to facilitate a short-range communication. For example, the NFC module may be implemented based on radio frequency identification (RFID) technology, infrared data association (IrDA) technology, ultra-wideband (UWB) technology, bluetooth (BT) technology, or other technologies.

In example embodiments, the apparatus 800 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing any of the above methods to determine the NSAG at the terminal side.

In example embodiments, there is also provided a non-transitory machine-readable storage medium including instructions, such as a memory 804 including instructions. The instructions are executable by the processor 820 of the apparatus 800 to accomplish the above-described method for determining the NSAG. For example, the non-transitory machine-readable storage medium may be ROM, random access memory (RAM), CD-ROM, magnetic tape, floppy disks, or optical data storage devices, among others.

Accordingly, the present disclosure also provides an apparatus for configuring a NSAG, including:
a processor;
a memory for storing processor executable instructions;
in which the processor is configured for performing any method for configuring the NSAG at the network device side as described above.

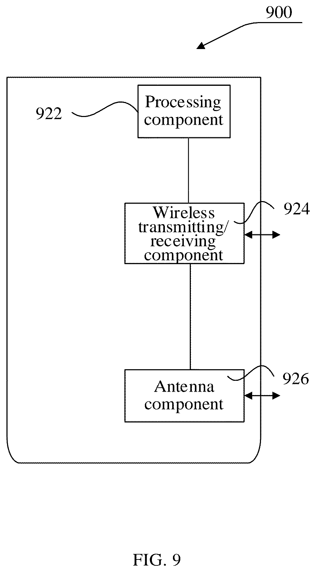

As shown in FIG. 9, FIG. 9 is a structure schematic diagram of an apparatus 900 for configuring a NSAG according to an example embodiment. The apparatus 900 may be provided as a network device. Referring to FIG. 9, the apparatus 900 includes a processing component 922, a wireless transmitting/receiving component 924, an antenna component 926, and a signal processing portion specific to the wireless interface, and the processing component 922 may further include at least one processor.

One of the processors in the processing component 922 may be configured for performing any method for configuring the NSAG as described above.

Other embodiments of the present disclosure will readily come to mind to those skilled in the art upon consideration of the specification and practice of the invention disclosed herein. The present disclosure is intended to cover any variations, uses, or adaptations of the present disclosure that follow the general principles of the present disclosure and include common knowledge or customary technical means in the art not disclosed herein. The specification and embodiments are to be regarded as exemplary only, and the true scope and spirit of the present disclosure is indicated by the following claims.

It is to be understood that the present disclosure is not limited to the precise structure that has been described above and illustrated in the accompanying drawings, and that various modifications and changes may be made without departing from its scope. The scope of the present disclosure is limited only by the appended claims.

## Claims

1. A method for determining a network slice AS group (NSAG), performed by a terminal, comprising:
determining one or more of first NSAGs as a target NSAG to be applied in a random access.

2. The method of claim 1, wherein determining the one or more of the first NSAGs as the target NSAG to be applied in the random access comprises:
determining all of the first NSAGs as the target NSAG; or
determining the one or more of the first NSAGs as the target NSAG.

3. The method of claim 1 or 2, wherein determining the one or more of the first NSAGs as the target NSAG to be applied in the random access comprises at least one of:
determining the one or more of the first NSAGs as the target NSAG based on a terminal policy;
determining the one or more of the first NSAGs as the target NSAG based on indication information sent by a network device; or
determining the one or more of the first NSAGs as the target NSAG based on a protocol agreement.

4. The method of claim 3, wherein the indication information indicates at least one of:
NSAG information; or
NSAG random access configuration information.

5. The method of claim 4, wherein the NSAG information comprises a NSAG priority, the NSAG priority is used to configure a first priority for multiple first NSAGs and the first priority is used to determine the target NSAG.

6. The method of claim 4 or 5, wherein the NSAG random access configuration information comprises at least one of:
random access resource partition configuration information; or
random access priority configuration information.

7. The method of any one of claims 1-6, wherein the target NSAG satisfies at least one of:
fully aligning with a NSAG associated with random access configuration information;
having a first priority satisfying a preset condition;
corresponding to a largest number of random access resource partitions;
corresponding to a random access resource partition including a largest number of features; or
corresponding to a random access resource partition including a highest feature priority.

8. The method of claim 7, wherein the features comprise at least one of:
small data transfer (SDT);
radio access network slicing (RAN Slicing);
coverage enhancement (CE);
reduced capability (REDCAP); or
other NSAGs.

9. The method of any one of claims 1-8, further comprising:
receiving NSAG configuration information sent by a network device, wherein the NSAG configuration information is used to configure a plurality of NSAGs, the plurality of NSAGs have different second priorities, and a second priority is used to determine one of the first NSAGs;
determining a NSAG having the second priority satisfying a preset condition as the one of the first NSAGs based on the NSAG configuration information.

10. The method of any one of claims 1-9, wherein the first NSAGs satisfy at least one of:
associated with single network slice selection assistance information (S-NSSAI) triggering the random access;
included in a system message; or
having a third priority satisfying a preset condition, wherein the third priority is used to determine the one or more of the first NSAGs.

11. A method for configuring a network slice AS group (NSAG), performed by a network device, comprising:
sending NSAG configuration information to a terminal, wherein the NSAG configuration information is used to configure a plurality of NSAGs, the plurality of NSAGs have different second priorities and a second priority is used to determine one of first NSAGs.

12. An apparatus for determining a network slice AS group (NSAG), applied to a terminal, comprising:
a determining module, configured to determine one or more of first NSAGs as a target NSAG to be applied in a random access.

13. An apparatus for configuring a NSAG, applied to a network device, comprising:
a sending module, configured to send NSAG configuration information to a terminal, wherein the NSAG configuration information is used to configure a plurality of NSAGs, the plurality of NSAGs have different second priorities and a second priority is used to determine one of first NSAGs.

14. A computer-readable storage medium, wherein the storage medium stores a computer program, the computer program being used to perform the method for determining the NSAG as claimed in any one of claims 1-10.

15. A computer-readable storage medium, wherein the storage medium stores a computer program, the computer program being used to perform the method for configuring the NSAG as claimed in claim 11.

16. A device for determining a NSAG, comprising:
a processor;
a memory for storing instructions executable by the processor,
wherein the processor is configured to perform the method for determining the NSAG as claimed in any one of claims 1-10.

17. A device for configuring a NSAG, comprising:
a processor;
a memory for storing instructions executable by the processor,
wherein the processor is configured to perform the method for configuring the NSAG as claimed in claim 11.
